## Europäisches Patentamt
## European Patent Office
## Office européen des brevets

(19)

(11) Publication number: **0 025 350**

A2

# EUROPEAN PATENT APPLICATION

(21) Application number: 80303132.7

(22) Date of filing: 05.09.80

(51) Int. Cl.³: **G 01 N 21/76**
G 01 N 21/13, G 01 N 35/00

(30) Priority: 05.09.79 GB 7930858

(43) Date of publication of application:
18.03.81 Bulletin 81/11

(84) Designated Contracting States:
AT BE CH DE FR GB IT LI LU NL SE

(71) Applicant: DYNATECH AG
Gartenstrasse 2
CH-6300 Zug(CH)

(72) Inventor: Holley, John Ernest Foster
9 Shipfield Close Tatsfield
Westerham Kent(GB)

(74) Representative: Warren, Keith Stanley et al,
BARON & WARREN 16 Kensington Square
London W8 5HL(GB)

(54) Apparatus for detecting luminescent reactions.

(57) Apparatus is provided for detecting luminescence produced by chemical or biochemical reactions conducted in multi-well plates. It includes a plate support (9) for a multi-well plate (10) having a central opening (13) beneath the plate, a row of photo-detectors (14) disposed closely adjacent the bottoms of the wells (16) of the plate, and a row of liquid injector tubes (19) disposed above the plate support. The photo-detectors (14) and injector tubes (19) are mounted on a carriage (16a) which is arranged to be advanced in steps so as successively to position the photo-detectors and tubes in register with the rows of wells of the plate (10). The plate support, photo-detectors, injector tubes, and associated components are installed in a light-proof casing having a cover which can be opened to permit access to the plate support and other components. When the photo-detectors (14) and tubes (19) are advanced into register with each row of wells (16) of a plate disposed on the plate support, a predetermined volume of liquid is introduced into each well of the row through the injector tubes for instigating a luminescent reaction in each of the wells, which have also been prefilled with suitable reactants, and the photo-detectors sense the luminescent reactions and produce output signals corresponding to the intensity of the luminescence produced in each well. These output signals are processed by a data processing unit which processes the signals to enable the results to be presented in a convenient manner.

Fig.2

-1-

## APPARATUS FOR DETECTING LUMINESCENT REACTIONS

### Background of the Invention

Certain chemical and biochemical reactions result in the production of luminescence and the light emitted by such reactions can be detected and used to determine the presence and quantities of particular micro-organisms and other substances. For example, this technique is useful for detecting particular micro-organisms by reaction with suitable light-emitting enzymes.

Chemical and biochemical reactions and other investigations are conducted with micro quantities of reactants and samples in multi-well plates having small wells or cups for containing the micro quantities of reactants and samples disposed in mutually perpendicular rows and columns. A typical plate is moulded in one piece from rigid transparent material and has eight rows of wells arranged in twelve columns.

It would be advantageous if luminescent reactions could be carried out under controlled conditions in apparatus which enables the luminescent reactions to be produced in the wells of a multi-well plate and which is adapted to detect these luminescent reactions and produce signals identifying their intensity. The present invention provides such apparatus for detecting and measuring the intensity of luminescent reactions conducted in multi-well plates.

### Summary of the Invention

Apparatus according to the invention for detecting the luminescence produced by chemical or biochemical reactions conducted in a multi-well plate comprises a plate support for supporting the multi-well plate, photo-detecting means for sensing the luminescence produced by reactions conducted in the individual wells of the plate and producing a signal corresponding to the intensity of the luminescence produced in each well, liquid injecting means for introducing a predetermined volume of liquid into each well for instigating a luminescent reaction therein, and casing means enclosing at least the plate support and the photo-detecting means within a substantially light-proof housing.

The apparatus is particularly suitable for use with conventional transparent multi-well plates. When adapted for use with such plates, the apparatus preferably includes a plate support adapted to permit transmission of light from the wells through the bottom of the plate support, and photo-detecting means arranged so as to be closely adjacent the bottoms of the wells of a plate disposed on the plate support. The plate support may simply be a rectangular frame which has an opening in its centre and on which the marginal portions of a multi-well plate can rest so that there is nothing material beneath the plate wells.

The photo-detecting means and the liquid injecting means, together, and the plate support may be relatively movable so that the wells in a plate may be injected with liquid and the resulting luminescence may be detected in a predetermined sequence. In this event, the photo-detecting means preferably comprises a row of photo-electric cells or detectors corresponding to a row of wells of the plate and the liquid injecting means comprises a row of injecting tubes disposed in a similar manner. The photocells and the injector tubes, together, and the plate support are arranged to be relatively movable so that the rows of wells of the plate are successively disposed in register with the photocells and injector tubes, whereupon luminescent reactions are instigated in each successive row of wells and such reactions are sensed by the row of photocells.

In an alternative arrangement, the plate support, photo-detecting means and injecting means may be mounted in fixed relation with respect to one another, in which event the photo-detecting means may comprise an array of photo-electric cells arranged so as to register respectively with the wells of a multi-well plate disposed on the plate support and the injecting means may comprise a similar array of injecting tubes.

The liquid injecting means may include any suitable form of pump for supplying precise predetermined volumes of liquid to the injecting tubes. Preferably, a peristaltic pump is used to achieve accurate dosage.

The housing means may comprise a suitable lid or cover enclosing the plate support and the photo-detecting means and openable to allow access to the support for positioning a multi-well plate in the apparatus. Suitable sealing means can be disposed between the cover and the remainder of the apparatus casing to form a substantially light-proof joint between the cover and the rest of the casing when the cover is closed.

Because the photocells are arranged closely adjacent the bottoms of the wells of a plate disposed on the plate support, there is a risk of cross talk affecting the output signals produced by the individual photocells. In order to prevent the occurrence of such cross talk, the plate support may have a grid-like structure of opaque partitions within its central opening which form individual compartments for containing the bottom portions of the wells of a plate and shield the luminescence produced in one well from impinging on a photocell arranged to sense the luminescence from an adjacent well.

As the apparatus is used to detect and measure bioluminescent and chemiluminescent reactions which tend to emit extremely small amounts of light, the photocells may be connected to amplifying means having a very high gain for producing an adequate output signal for use with subsequent processing equipment. In order to achieve the very high gain required, the amplifying means includes a feedback loop having an extremely high resistance, for example, of the order of $10^{11}$ ohms. The amplifying means is conveniently mounted on a printed circuit board also mounting the photocells, thereby to avoid long leads which attenuate the very small output signals from the photocells, and to prevent the material of the board from reducing the high resistance required for the feedback loop, which is much higher than the resistance of the board material, itself, the output terminal of the amplifying means, to which the feedback loop is connected, is arranged to be unconnected with and spaced from the board.

The output signals from the photo-detecting means may be fed to a data processing device which can store and process these signals so as to enable the results to be presented in the most convenient manner. For example, the data processing device may be adapted to produce digital signals identifying the intensity of the luminescence produced by the luminescent reaction sensed in each cell and these digital signals may be displayed on a visual display unit and/or be recorded on a printed or punched tape.

Brief Description of the Drawings

In order that the invention may be more readily understood, reference will now be made to the accompanying drawings in which:-

Fig. 1 is a cross-sectional view through apparatus constructed in accordance with the invention,

Fig. 2 is a diagrammatic perspective view of the apparatus shown in Fig. 1,

Fig. 3 is a block circuit diagram of the control circuitry of the apparatus, and

Fig. 4 is a circuit diagram of the amplifying circuit for each photo-electric cell.

Description of the Preferred Embodiment

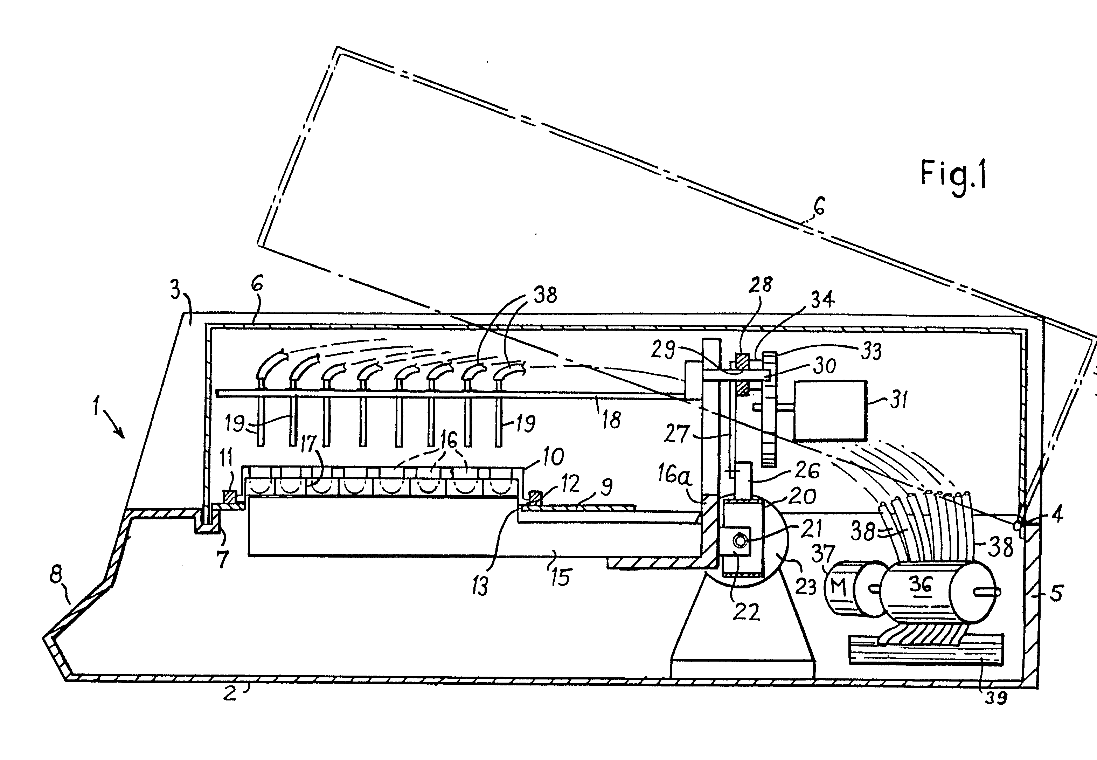

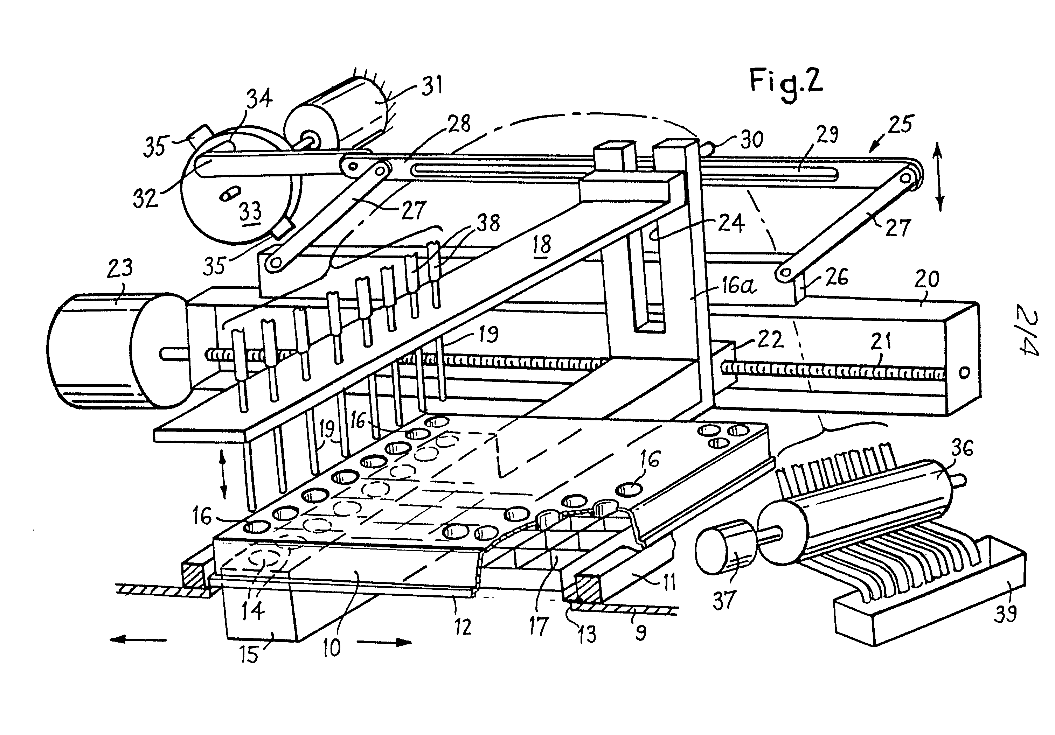

Referring to Figs. 1 and 2 of the drawings, the apparatus comprises a casing 1 having a hollow base part 2 which is of generally rectangular configuration in plan and which has side walls 3 projecting upwardly from opposite sides of the base part. Hinged at 4 to the rear

-5-

wall 5 of the base part, between the side walls 3, is a hollow rectangular cover or lid 6 which, when closed into the full line position shown in Fig. 1, forms a substantially light-proof housing in conjunction with the base part 2. In the closed position of the cover, the lower edges of the latter seat in a channel 7 fixed about the base part and serving to provide an essentially light-proof joint between the cover and the base part. At the front of the apparatus, the base part 2 is provided with a control panel 8 which may mount an on/off switch for the apparatus and include a visual display unit for monitoring the readings from one selected well of each multi-well plate to be tested in the apparatus so as to provide a check on the operation of the apparatus.

Mounted in a fixed position within the base part, adjacent the front thereof, is a plate support 9 for a multi-well plate 10 of conventional eight by twelve format. The plate support includes a rectangular frame 11 for locating the multi-well plate in a predetermined position by means of its marginal flange 12 which rests on the support. The support has a central rectangular opening 13 corresponding to the wells 16 in the plate.

Movably mounted within the opening 13 in the plate support is a row of photo-detectors or photo-electric cells 14 which are arranged to register with the wells in each row of the plate 10. The photocells 14 may be silicon detectors treated to have optimum response at the U.V. end of the spectrum and preferably having a large active cell area corresponding to the cross-sectional area of each well 16. They are mounted on a lower cantilever arm 15 of a movable carriage 16a which is advanced, as hereinafter more fully described, in order successively to index the row of photocells in register with the rows of wells of the plate 10 in order to sense luminescence produced in the wells in response to luminescent reactions conducted therein. The photocells 14 are mounted by the arm 15 so as to be closely adjacent the bottoms of the wells 16 in order to sense the small amounts of light emitted by the luminescent reactions. For example, the photocells may be spaced about one-sixteenth inch (approximately 1.5 mm) below the bottoms of the wells.

As the photocells 14 are located very close to the bottoms of the wells 16 in order to sense the small amounts of light emitted by the luminescent reactions, there is a risk of cross talk occurring, whereby the light emitted from one well impinges on photocells sensing the light emitted from adjacent wells and affects the output signals from the adjacent photocells. In order to prevent such cross talk, a grid-like structure 17 of opaque partitions is arranged in the opening in the frame 11 of the plate support. These partitions extend longitudinally and transversely of the multi-well plate disposed on the plate support on the underside of the plate and between the rows and columns of wells 16 and form individual compartments for the bottom portions of the wells which shield the light emitted from one well from impinging on a photocell sensing the luminescence in an adjacent well. The bottom edges of the grid structure are spaced slightly above the upper surface of the photocell support.

The carriage 16a includes an upper cantilever arm 18 which is mounted on the carriage so as to be reciprocable in a generally vertical direction and which supports a row of injector tubes 19 for injecting liquid into the wells of the plate. The injector tubes 19 are disposed immediately above the row of photocells so as to inject liquid into the same row of wells as is being sensed by the photocells.

The carriage 16a is slidably mounted by a frame 20 secured within the base part behind the plate support and mounting a lead screw 21 which engages a cooperating nut 22 secured to the carriage in order to advance the carriage

-7-

relative to the plate support and the multi-well plate disposed therein. The feed screw 21 is rotated by means of a stepping motor 23 which is precisely controlled in order to advance the carriage in steps so as successively to index the photocells 14 and injector tubes 19 in register with the rows of wells of the plate. At each step, the injector tubes are lowered into the row of wells therebeneath, so as to introduce a predetermined volume of liquid into each well of the row, and are then raised from the wells preparatory to the next step. To achieve this movement, the upper arm 18 of the carriage is slidably supported in a vertical slot 24 in the carriage and reciprocating movement of the arm is controlled by a parallelogram mechanism 25 secured to the frame 20 adjacent the carriage. This parallelogram mechanism comprises a member 26 fixed to the frame and connected by pivoted parallel links 27 to a movable member 28 disposed parallel to the fixed member 26. The movable member 28 has a slot 29 extending along the length thereof in which is engaged a pin 30 projecting from the arm 18, whereby the latter is reciprocated in response to movement of the parallelogram mechanism 25. The mechanism is actuated by an AC motor 31 which is coupled to one end of the movable member 28 by a connecting rod 32 and a crank device comprising a wheel 33 secured to the output shaft of the motor and connected to the connecting rod 32 by a pivot 34. Rotation of the wheel 33 by the motor rocks the parallelogram mechanism upwards and downwards and, via the pin 30, reciprocates the arm 18 and, hence, the injector tubes, in a vertical direction. The slot 29 coupling the member 28 to the pin 30 permits reciprocation of the arm 18 as the carriage is advanced relatively to the rows of wells of the plate. Mounted at diametrically opposite positions on the wheel 33 are two Hall-effect magnetic switches 35 which control the operation of the motor 31 and stop the injector tubes successively in their lower and upper positions.

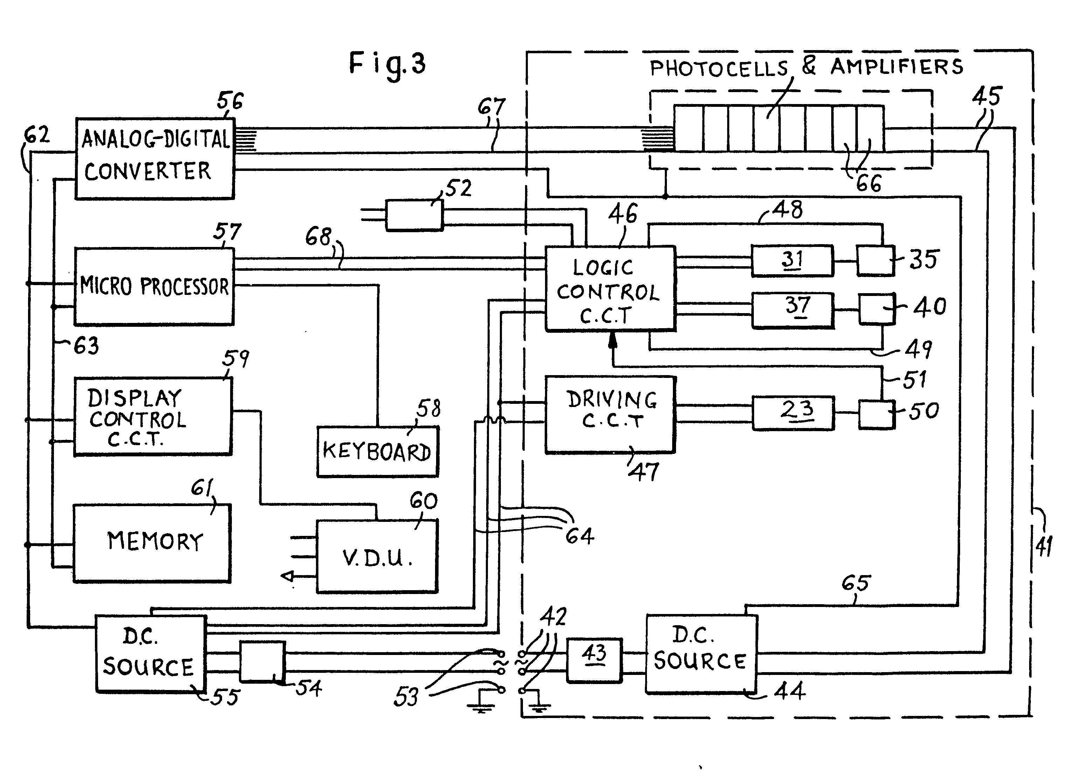

Precise volumes of liquid are supplied to the injector tubes 19 by means of a peristaltic pump 36 driven by an AC motor 37 and mounted in the rear of the casing base part 2. The liquid is supplied to the injector tubes through flexible tubes 38 connected to the upper ends of the injector tubes and is withdrawn from a liquid containing trough 39 also mounted in the rear of the base part 2. Upon actuation of the AC motor 37, the peristaltic pump supplies a precisely predetermined volume of liquid to the injector tubes and produces a drop of the liquid at the lower end of each injector tube. Upon lowering of the injector tubes into a row of wells 16, the drops of liquid at the ends of the injector tubes contact the surface of liquid in the wells and are removed from the ends of the tubes by surface tension. Stopping of the motor 37 at the end of a pumping step is controlled by a Hall-effect magnetic switch 40 (Fig. 3).

In the closed position of the cover 6, the various components described above and mounted in the base part of the casing are all enclosed in the light-proof housing formed by the base part and cover.

The control circuitry for the apparatus is illustrated in Fig. 3. The portion of the circuit enclosed within the dotted line box 41 is disposed in the casing 1 of the apparatus whilst the remainder of the circuit is arranged as a separate data processing unit. The circuitry of the casing includes terminals 42 for connecting the circuit to a convenient AC mains supply which is coupled via a transformer 43 to a stabilized DC power source 44 which provides a stabilized DC power supply to the photocells 14 and associated high gain amplifiers, generally indicated at 66, via lines 45. The amplifiers are mounted adjacent the photocells on a single printed circuit board housed in the arm 15 of the carriage 16a in order to avoid
long leads between the photocells and their associated
amplifiers. Also included in the circuitry within the
casing is a logic control circuit 46 for the AC motors
31,37 which reciprocate the injector tubes and drive the
peristaltic pump, and a driving circuit 47 for the stepping motor 23 which advances the carriage. The magnetic
switches 35,40 controlling stopping of the motors 31,37
are connected to the logic control circuit 46 via lines
48,49, respectively. There is also an additional Hall-
effect magnetic switch 50 associated with the carriage 16a
which determines the start position of the carriage prior
to commencement of a detection sequence on a multi-well
plate. When the carriage is returned to its start position, the magnetic switch 50 signals the logic control
circuit 46, via the line 51, which switches-off the driving
circuit and indicates to the logic control that the apparatus is in the start position. AC power for the motors
31,37 is supplied to the motors, via the logic circuit 46,
from a transformer 52 connected to a convenient AC source.

The data processing unit comprises terminals 53 for
connecting the unit to a convenient AC mains supply which
is coupled, via a transformer 54, to a DC power source 55
for supplying DC power at the required voltage to the
circuit components of the processing unit. The latter
comprises an analogue-digital converter 56, a micro-
processor 57 controllable by a keyboard 58, a display
control circuit 59 for controlling a visual display unit
60, and a two-part memory circuit 61 which includes a preprogrammed memory and a random access memory. The circuits 56-61 are supplied with power from the power source
55, via a line 62, and are inter-connected by a data buss
63. The power source 55 is also connected, via lines 64,
to supply DC power to the logic control circuit 46 and
the driving circuit 47, whilst a pseudo earth or ground lead 65 from the stabilized power source is connected to photocell and amplifier circuitry 66 and also the analogue-digital converter 56 in the data processing unit. The purpose of this is to avoid differences in earth potential between the amplifiers and the converter which would affect the accuracy of the results in view of the very small voltage output signals produced by the amplifiers. The output signals from the eight amplifiers are fed to the analogue-digital converter 56, via eight lines 67. The micro-processor 57 is connected to control the logic control circuit 46 via lines 68.

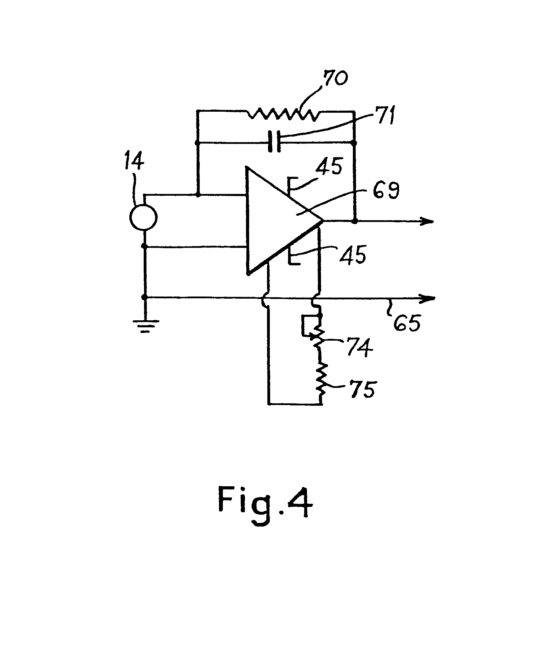

The amplifier associated with each of the photocells 14 is a very high gain amplifier, the circuit of which is illustrated in Fig. 4. This amplifier converts the very small current signals (of the order of 1 fA) produced by the photocell, as a result of detecting luminescence in a well of a micortitration plate, into a voltage output signal and amplifies the signal to a voltage of the order of 1 to 10 millivolts. The circuit comprises the photocell 14 connected across the input to the amplifier 69 which is supplied with stabilized DC voltage from the power source 44, via the lines 45. A feedback loop comprising a resistor 70 and capacitor 71 in parallel is connected between the output terminal 72 of the amplifier, which is connected to the analogue-digital converter 56, and one of the inputs 73 of the amplifier. The pseudo earth 65 of the power source 44 is connected to the junction between the photocell and the other input to the amplifier. A zeroing circuit including fixed and adjustable resistors 74,75 in series is also connected to the amplifier to permit adjustment of the amplifier to achieve a zero bias in dark conditions when no light impinges on the photocell.

In order to achieve the high gain required to convert the small current signals produced by each photocell into an adequate voltage output signal of the abovementioned order, the feedback loop must have an ultra high resistance, of the order of $10^{11}$ ohms. This resistance is higher than the resistance of the material of the printed circuit board on which the amplifier is mounted and, hence, in order to avoid the resistance of the material of the board, which in a conventionally mounted amplifier is, in effect, in parallel with the resistance of the feedback loop, from reducing the resistance value of the feedback loop, the output terminal 72 of the amplifier, to which the feedback loop is connected, is arranged to be spaced from and out of contact with the material on the board and the resistor and capacitor 70,71 are spaced from the board. The purpose of the capacitor 71, the value of which is of the order of 30 to 100 pf, connected in parallel with the resistor 70, is to prevent drift.

The apparatus is operated in the following manner. A conventional multi-well plate 10 containing samples and, if necessary, one or more reagents required for producing luminescent reactions, although not the final reagent for instigating such reactions, is disposed on the plate support in the apparatus. For example, when testing urine, urine samples are placed in the wells of the plate together with an enzyme for leaching ATP from cells in the urine. If ATP is leached from the cells, this will luminesce when mixed with luciferase-containing reagent, the latter being added via the injector tubes 19 of the apparatus in order to instigate the luminescent reactions at the required moment. Having located the plate on the plate support 9, the cover 6 is closed so that the plate is contained within the light-proof casing.

To commence a detection cycle, the keyboard 58 is actuated in order to cause the stepping motor 23 to return the carriage 16a to its start position. Upon return of the carriage to its start position, the magnetic switch 50 produces a signal indicating that the apparatus is in condition to commence a detection sequence. The start position is such that the photocells and injector tubes
are spaced a predetermined distance to the rear of the
first row of cells of the plate. In this position, the
micro-processor 57 can be operated, by the keyboard, to
monitor the readouts from the photocells 14 and produce
a base line reading which should show no light present in
the casing 1. Thereafter, the micro-processor is operated,
via the keyboard, to initiate the first detection cycle,
whereupon, in response to control signals derived from the
micro-processor and memory 61, the following cycle of
operations occurs:-

(a) the carriage 16a is stepped forward to align
the photocells 14 and injector tubes 19 with the first row
of wells 16 of the plate:

(b) the peristaltic pump 36 is actuated to supply
liquid for instigating luminescent reactions from the
trough 39 to the injector tubes 19 and produce a droplet
of the liquid at the end of each tube:

(c) the motor 31 is actuated to lower the arm 18
and injector tubes into the row of wells so as to introduce the droplets of liquid into the substances in the
wells and instigate the luminescent reaction:

(d) the signals produced by the photocells 14, on
sensing luminescence, are fed to the analogue-digital
converter 56 and are scanned in succession under the control of the micro-processor, the converter produces digital signals corresponding to the magnitude of the scanned
samples and these digital signals are stored in the random
access part of the memory circuit 61 to provide a measurement of the average intensity of light emitted by the
luminescent reactions occurring in each cell over a predetermined time period:

(e) during the detection cycle, the motor 31 is
actuated in order to raise the injector tubes from the
wells preparatory to advance of the carriage to the next
row of wells.

-13-

In response to actuation of the keyboard 58, the results of the first detection step can be extracted from the memory 61 and, under control of the display control circuit 59, can be displayed on the visual display unit 60 for examination by an operator. The next detection cycle can be initiated automatically in response to termination of the first cycle so that a series of readings are automatically obtained for each row of wells on the plate and are stored in the memory. Alternatively, initiation of the next cycle can be controlled in response to actuation of the keyboard. In either event, the series of readings obtained, in addition, or alternatively, to being displayed on the visual display unit 60, can be recorded on a printed or punched tape (not shown).

Whilst a particular embodiment has been described, it will be understood that modifications can be made without departing from the scope of the invention as defined by the appended claims. For example, instead of connecting a single amplifier 69 having an ultra high resistance feedback loop to each photocell detector 14, a plurality of amplifiers may be used having proportionally smaller resistances in their feedback loops. The use of more than one amplifier improves the speed of response of the equipment.

-14-

## CLAIMS

1. Apparatus for detecting luminescence produced by luminescent reactions conducted in a multi-well plate (10), characterized by a plate support (9) for supporting said multi-well plate, photo-detecting means (14) for sensing the luminescence produced by reactions conducted in individual wells (16) of the plate and producing signals corresponding to the intensity of said luminescence, liquid injecting means (19,36) for introducing a predetermined volume of liquid into each well for instigating a luminescent reaction therein, and a casing (1) enclosing at least the plate support (9) and the photo-detecting means (14) within a substantially light-proof housing.

2. Apparatus as claimed in claim 1, characterized in that the plate support (9) is adapted to permit transmission of light from the wells (16) of a multi-well plate through the plate support, and the photo-detecting means (14) is arranged so as to be adjacent the bottoms of the wells of a plate disposed on the plate support.

3. Apparatus as claimed in claim 1 or 2, characterized by means (15,16a,18) mounting the photo-detecting means (14) and the liquid injecting means (19), said mounting means and the plate support (9) being relatively movable so that the wells of a plate are injected with liquid and the resulting luminescence is detected in a predetermined sequence.

4. Apparatus as claimed in claims 2 and 3, characterized in that the photo-detecting means includes a row of photo-detectors (14) corresponding to a row of wells (16) of a plate and disposed closely adjacent the bottoms of the wells when said plate is disposed on the plate support (9), and said liquid injecting means comprises a row of injector means (19) corresponding to a row of wells of the plate and disposed above the plate support and further characterized in that the mounting means (15,16a,18) simultaneously supports the photo-detectors and injector means in operative relation with the same row of wells, and said mounting means and plate support are adapted to be relatively movable, whereby said rows of wells of said plate are successively disposed in register with said photo-detectors and injector means.

5. Apparatus as claimed in claim 4, characterized in that the plate support (9) has an opening (13) therein permitting transmission of light from the wells through the plate support, said opening including a grid-like structure (17) of opaque partitions which form individual compartments for containing at least the bottom portions of the wells and shield the luminescence produced in one well from impinging on a photo-detector (14) arranged to sense the luminescence in an adjacent well, whereby to prevent the occurrence of cross talk.

6. Apparatus as claimed in claim 5, characterized in that the plate support (9) is stationary and the mounting means comprises movable carriage (16a), and further characterized by means (18,24) mounting the injector means (19) on the carriage for reciprocation along a path substantially perpendicular to the plate support so as to lower and raise the injector means relatively to the plate wells (16), means (21,23) for advancing the carriage in steps relatively to the plate support, whereby to position the photo-detectors (14) and injector means (19) successively in register with the rows of wells of the plate, means (25,31,33) for lowering and raising the injector means in response to each advancing step of the carriage, and control means for controlling actuation of the apparatus so as successively to instigate luminescent reactions in each row of wells of the plate and cause the photo-detectors to sense the intensity of said luminescent reactions in each row.

7. Apparatus as claimed in any preceding claim, characterized in that the liquid injecting means includes a

-16-

pump (36) for supplying precise predetermined volumes of liquid to the injector means (19) for delivering the liquid into the wells.

8. Apparatus as claimed in any preceding claim, including amplifying means connected to amplify the output signals from the photo-detecting means (14).

9. Apparatus as claimed in claim 8, characterized in that the amplifying means (69) is mounted on a printed circuit board and includes a feedback loop (70,71) having an ultra high resistance connected between output and input terminals of the amplifying means, and further characterized in that the amplifying means is mounted on said printed circuit board with said output terminal disposed out of contact with and spaced from the printed circuit board material.

10. Apparatus as claimed in any preceding claim, including data processing means for storing and processing the signals produced by the photo-detecting means (14) and for presenting said signals in a suitable form for reading and recording.

Fig.1

Fig.2

Fig.3

PHOTOCELLS & AMPLIFIERS

ANALOG-DIGITAL CONVERTER

MICRO PROCESSOR

DISPLAY CONTROL C.C.T.

MEMORY

KEYBOARD

V.D.U.

D.C. SOURCE

LOGIC CONTROL C.C.T.

DRIVING C.C.T.

D.C. SOURCE

31

37

23

3/4

0025350

Fig.4